# EUROPÄISCHE PATENTANMELDUNG

(11) **EP 3 531 299 A1**
(43) Veröffentlichungstag der Anmeldung: **28.08.2019**
(21) Anmeldenummer: 19158688.2
(22) Anmeldetag: 21.02.2019
(51) Int. Cl.: G06F 16/2458

(54) **COMPUTERIMPLEMENTIERTES VERFAHREN ZUM ABFRAGEN EINES SUCHRAUMS**

(30) Priorität: 27.02.2018 DE 102018104441
(71) Anmelder: DTMS GmbH, 55118 Mainz (DE)
(72) Erfinder: Solak, Imdat, 81539 München (DE)
(74) Vertreter: Rothkopf, Ferdinand

(57) **Zusammenfassung**

Die Erfindung betrifft ein computerimplementiertes Verfahren zum Abfragen eines Suchraums mit den Verfahrensschritten: Eingeben eines Anfrage-Datensatzes, Ermitteln eines Antwort-Datensatzes zu dem Anfrage-Datensatz und Ausgeben des Antwort-Datensatzes, wobei bei dem Ermitteln des Antwort-Datensatzes ein zeitgleiches Ausführen von mindestens zwei Suchalgorithmen erfolgt.

## Beschreibung

### Gebiet der Erfindung

Die Erfindung betrifft ein computerimplementiertes Verfahren zum Abfragen eines Suchraums mit den Verfahrensschritten: Eingeben eines Anfrage-Datensatzes, Ermitteln eines Antwort-Datensatzes zu dem Anfrage-Datensatz und Ausgeben des Antwort-Datensatzes.

### Hintergrund der Erfindung

Computerimplementierte Verfahren werden auf Computern mit installierten Computerprogrammen ausgeführt. Ein Computer wird mittels eines Computerprogramms mit Anweisungen bzw. Befehlen dazu veranlasst, bestimmte Aufgaben zu bearbeiten oder zu lösen. Das Abfragen eines Suchraums ist eine solche Aufgabe. Dabei wird grundsätzlich versucht, mindestens eine Information in dem Suchraum, der als Informationsquelle dient, zu finden. Dazu wird zuerst der Anfrage-Datensatz, mit dem die Information angefragt wird, in den Computer eingegeben. Anhand des eingegebenen Anfrage-Datensatzes sucht das Computerprogramm dann nach der Information. Wird die gesuchte Information gefunden, wird diese mit dem Antwort-Datensatz schließlich von dem Computer ausgegeben.

Manchmal hat die gefundene Information bzw. der ermittelte Antwort-Datensatz nicht die gewünschte Qualität, passt also nicht genau zu dem Anfrage-Datensatz. Außerdem kommt es vor, dass die Information nur mit großem Zeitaufwand oder gar nicht gefunden wird, obwohl diese in der Informationsquelle zur Verfügung steht.

Der Erfindung liegt daher die Aufgabe zugrunde, ein Verfahren zu schaffen, welches die gesuchte Information effizient und passgenau zur Verfügung stellt.

### Zusammenfassung der Erfindung

Erfindungsgemäß ist ein computerimplementiertes Verfahren zum Abfragen eines Suchraums zur Verfügung gestellt, mit den Verfahrensschritten: Eingeben eines Anfrage-Datensatzes, Ermitteln eines Antwort-Datensatzes zu dem Anfrage-Datensatz und Ausgeben des Antwort-Datensatzes, wobei bei dem Ermitteln des Antwort-Datensatzes ein zeitgleiches Ausführen von mindestens zwei Suchalgorithmen erfolgt. Es werden also mehrere Suchalgorithmen parallel ausgeführt, um eine gesuchte Information in dem Suchraum zu finden. Suchalgorithmen sind eindeutige Handlungsvorschriften zum Suchen nach bestimmten Informationen in einem Suchraum. Dabei ist der Suchraum eine zu durchsuchende Menge an Informationen. Indem mehrere Suchalgorithmen zeitgleich bzw. als parallele Prozesse ausgeführt werden, wird das Ermitteln des Antwort-Datensatzes erheblich beschleunigt.

Bei einer vorteilhaften Weiterbildung der Erfindung wird bei dem Ermitteln des Antwort-Datensatzes mindestens eine Variante des Anfrage-Datensatzes erstellt und die mindestens eine Variante an die mindestens zwei Suchalgorithmen übergeben. Der Anfrage-Datensatz wird also in mindestens einer, vorzugsweise in mehreren, besonders bevorzugt in mehreren abgewandelten Versionen an jeden der Suchalgorithmen übergeben. Dadurch erhöht sich die Chance, dass der Anfrage-Datensatz inhaltlich richtig erfasst wird und somit auch die Wahrscheinlichkeit, dass ein richtiger und passgenauer Antwort-Datensatz ermittelt wird. Dabei beinhalten die Varianten bzw. die mindestens eine Variante vorzugsweise eine Variante mit dem originalen Anfrage-Datensatz, eine auf Eingabefehler geprüfte Variante des Anfrage-Datensatzes, eine um mindestens eine Information erweiterte Variante des Anfrage-Datensatzes und/oder eine auf Eingabefehler geprüfte und um mindestens eine Information erweiterte Variante des Anfrage-Datensatzes. Die Wahrscheinlichkeit für das Ermitteln eines passgenauen Antwort-Datensatzes erhöht sich dabei umso stärker, je mehr solcher Varianten an die Suchalgorithmen übergeben werden.

Vorteilhaft wird der Suchraum bei dem Ermitteln des Antwort-Datensatzes in mehrere Segmente aufgeteilt, mit jeweils einem Suchalgorithmus pro Segment. Die Suchalgorithmen werden also in ihren jeweiligen Segmenten des Suchraums ausgeführt, wobei die Suchalgorithmen bevorzugt identisch sind. Das Aufteilen des Suchraums und das parallele Durchsuchen der Suchraumteile bzw. Segmente macht das Ermitteln des Antwort-Datensatzes deutlich effizienter.

Ferner werden die Segmente bei dem Aufteilen des Suchraums vorzugsweise indexiert. Vorteilhaft wird der Index jeweils als einmalige ganze Zahl ausgebildet. Dabei entsteht ein Suchraum mit mehreren Dimensionen, und zwar mit genau so vielen Dimensionen wie Segmente bei dem Aufteilen des Suchraums erzeugt werden. Mithilfe des Indexierens kann ein strukturiertes Durchsuchen des Suchraums erfolgen, was zu einer weiteren Effizienzsteigerung bei dem Ermitteln des Antwort-Datensatzes führt.

Bei dem Ausführen der mindestens zwei Suchalgorithmen wird vorteilhaft aus einem Hauptprozess heraus für jedes Segment ein Segment-Prozess gestartet, mindestens ein Ergebnis-Datensatzes pro Segment erzeugt und an den Hauptprozess übergeben und der Segment-Prozess jeweils beendet. In dem Hauptprozess läuft das Computerprogramm bzw. das computerimplementierte Verfahren ab. Aus diesem Hauptprozess heraus wird gleichzeitig bzw. parallel für jedes Segment des Suchraums ein Prozess gestartet. Der Hauptprozess wartet dann ab, bis alle Segment-Prozesse mindestens einen Ergebnis-Datensatz übergeben haben und beendet wurden. Die übergebenen Ergebnis-Datensätze enthalten jeweils eine Antwort bzw. Information zu dem Anfrage-Datensatz, aus denen später ein Antwort-Datensatz ausgewählt wird, der schließlich als Antwort-Datensatz ausgegeben wird. Auf diese Weise wird in kurzer Zeit eine Mehrzahl von Ergebnis-Datensätzen bzw. potentiellen Antwort-Datensätzen generiert.

Bei einer vorteilhaften Weiterbildung wird bei dem Ausführen der mindestens zwei Suchalgorithmen ferner ein Konfidenz-Wert für jeden Ergebnis-Datensatz bestimmt, und die Ergebnis-Datensätze werden nach ihren Konfidenz-Werten sortiert. Der Konfidenz-Wert ist hier ein Maß für die Wahrscheinlichkeit, dass der erzeugte Ergebnis-Datensatz eine richtige Antwort auf die angefragte Information bzw. den Anfrage-Datensatz beinhaltet. Mithilfe der jeweiligen Konfidenz-Werte sind die Ergebnis-Datensätze in ihrer Qualität bzw. Passgenauigkeit bezüglich des Anfrage-Datensatzes unterscheidbar. Dadurch sind sowohl Aussagen über die absolute Passgenauigkeit eines Ergebnis-Datensatzes als auch über die relative Passgenauigkeit im Vergleich zu anderen Ergebnis-Datensätzen möglich, die dabei eine wichtige Entscheidungsgrundlage für die weitere Nutzung der Ergebnis-Datensätze bilden.

Darauf aufbauend wird bei dem Ausführen der mindestens zwei Suchalgorithmen vorteilhaft eine bestimmte Anzahl von Ergebnis-Datensätzen mit den höchsten Konfidenz-Werten bereitgestellt, vorzugsweise die Ergebnis-Datensätze mit den zehn höchsten Konfidenz-Werten. Die übrigen Ergebnis-Datensätze bzw. die Ergebnis-Datensätze mit der geringsten Passgenauigkeit werden also verworfen und nicht mehr für eine weitere Verwendung bzw. Verarbeitung vorgehalten. Dadurch werden Speicherressourcen gespart.

Ferner erfolgt bei dem Ausführen der mindestens zwei Suchalgorithmen ein Neuronalnetzwerk-Suchen, vorzugsweise mittels eines Shallow-Neuronalnetzwerks. Mit einem Neuronalnetzwerk ist hier grundsätzlich ein künstliches neuronales Netzwerk gemeint. Solche Netzwerke beinhalten mehrere Neuronen, die auch als Einheiten oder Knoten bezeichnet werden, und im Folgenden als Knoten bezeichnet werden. Die Knoten dienen dazu, Informationen von außen oder von anderen Knoten aufzunehmen und an andere Knoten oder nach außen in modifizierter Form weiterzuleiten. Unter einem Shallow-Neuronalnetzwerk ist hier ein flaches Neuronalnetzwerk zu verstehen, das heißt es gibt keine oder nur eine geringe Anzahl von sogenannten verdeckten Knoten, also Knoten die Informationen von einem anderen Knoten aufnehmen und/oder an andere Knoten weiterleiten. Das Neuronalnetzwerk-Suchen ermöglicht das Ermitteln von Informationen bzw. von Ergebnis-Datensätzen auch dann, wenn über ein zu lösendes Problem bzw. zu dem Anfrage-Datensatz kein oder nur geringes explizites bzw. eindeutig kommunizierbares Wissen vorliegt. Dabei ist das Neuronalnetzwerk-Suchen mit dem flachen Neuronalnetzwerk schneller als mit einem tiefen Neuronalnetzwerk bzw. einem Deep-Learning-Neuronalnetzwerk, welches eine höhere Anzahl verdeckter Knoten beinhaltet. Dadurch wird letztendlich das Ermitteln des Antwort-Datensatzes beschleunigt.

Die Erfindung sieht ferner ein computerlesbares Speichermedium vor, mit einem Computerprogramm mit Befehlen, die bei dem Ausführen des Computerprogramms einen Computer dazu veranlassen, die Schritte mindestens einer der oben beschriebenen Ausführungsformen des computerimplementierten Verfahrens auszuführen. Das Speichermedium ist dafür vorgesehen, zumindest das Computerprogramm mit dem computerimplementierten Verfahren sicher zu speichern.

Gemäß der Erfindung ist ferner ein Datenverarbeitungssystem zum Ausführen eines computerimplementierten Verfahrens nach mindestens einem der oben beschriebenen Ausführungsformen bereitgestellt, bei dem das Datenverarbeitungssystem einen Computer, eine Eingabe-Einrichtung, eine Ausgabe-Einrichtung, ein Netzwerk aufweist, wobei der Computer ein Computerprogramm und ein Speichermedium umfasst. Das Datenverarbeitungssystem ist zum Organisieren von Daten vorgesehen, und bildet die Grundlage für die oben beschriebenen Ausführungsformen des computerimplementierten Verfahrens. Der Computer ist zum Verarbeiten von Eingabe-Daten, vorzugsweise Anfrage-Datensätzen, in Ausgabe-Daten, vorzugsweise Antwort-Datensätzen, bereitgestellt. Die Eingabe-Einrichtung ist vorgesehen, um die Eingabe-Daten in den Computer einzugeben. Die Ausgabe-Einrichtung ist vorgesehen, um die Ausgabe-Daten von dem Computer auszugeben. Das Netzwerk bietet eine externe Informationsquelle für den Computer. Als Netzwerk wird vorzugsweise das Internet verwendet. Das Computerprogramm ist zum Ausführen des computerimplementierten Verfahrens auf dem Computer vorgesehen. Das Speichermedium ist zum Speichern von Daten, insbesondere der Ergebnis-Datensätze, bereitgestellt. Sämtliche für das computer-implementierte Verfahren aufgeführte Vorteile gelten auch für das erfindungs-gemäße Datenverarbeitungssystem.

Ferner sind weitere Ausführungsformen möglich, die das computerimplementierte Verfahren und das Datenverarbeitungssystem noch effizienter machen.

So wird das Neuronalnetzwerk-Suchen mittels des Shallow-Neuronalnetzwerks bevorzugt auf derselben Hardwarekomponente ausgeführt, wie der Hauptprozess des computerimplementierten Verfahrens. Neuronalnetzwerke beanspruchen große Rechen- und Speicherressourcen, auch CPU- und RAM-Ressourcen genannt. Bei dem flachen bzw. Shallow-Neuronalnetzwerk werden diese Ressourcen jedoch nur für einen kurzen oder überschaubaren Zeitraum beansprucht, weshalb vorteilhaft auf ein Auslagern dieses Neuronalnetzwerk-Suchens auf eine externe Hardwarekomponente verzichtet wird. Zudem werden so Kosten für die externe Hardwarekomponente eingespart.

Alternativ erfolgt in einer weiteren bevorzugten Ausführungsform das Neuronalnetzwerk-Suchen mittels eines Deep-Learning-Neuronalnetzwerk, wobei dieses Neuronalnetzwerk-Suchen vorzugsweise auf einer externen Hardwarekomponente bzw. einer anderen Hardwarekomponente als der Hauptprozess erfolgt. Die Hardware, auf welcher der Hauptprozess des computerimplementierten Verfahrens abläuft, wird dadurch hinsichtlich Rechen- und Speicherressourcen erheblich entlastet.

Da das Shallow-Neuronalnetzwerk den Computer bzw. die Hardwarekomponente auf der der Hauptprozess abläuft hinsichtlich Rechen- und Speicherressourcen am stärksten belastet, erfolgt das Neuronalnetzwerk-Suchen mittels Shallow-Neuronalnetzwerk vorteilhaft nur dann, wenn alle anderen verfügbaren Suchalgorithmen bereits verwendet wurden und zu keinem akzeptablen Ergebnis-Datensatz bzw. keinem Antwort-Datensatz geführt haben. Dabei sind die anderen Suchalgorithmen Algorithmen zur Ähnlichkeitssuche und/oder Neuronalnetzwerk-Suchen mittels Deep-Learning-Neuronalnetzwerk auf einer externen Hardwarekomponente.

### Kurzbeschreibunq der Zeichnungen

Nachfolgend wird ein Ausführungsbeispiel der erfindungsgemäßen Lösung anhand der beigefügten schematischen Zeichnungen näher erläutert. Es zeigt:
- Fig. 1: ein Blockdiagramm eines Ausführungsbeispiels eines erfindungsgemäßen Datenverarbeitungssystems,
- Fig. 2: das Detail II gemäß Fig. 1,
- Fig. 3: einen Programmablaufplan eines Ausführungsbeispiels eines erfindungsgemäßen computerimplementierten Verfahrens und
- Fig. 4: das Detail IV gemäß Fig. 3.

### Detaillierte Beschreibung der Erfindung

Zum besseren Verständnis werden im Folgenden zweistellige Bezugszeichen zum Bezeichnen von Komponenten und dreistellige Bezugszeichen zum Bezeichnen von Verfahrensschritten verwendet.

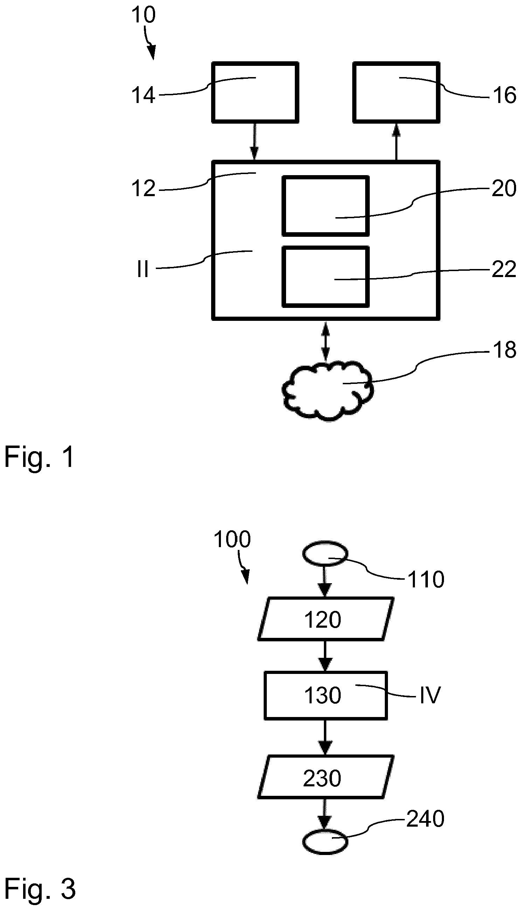

Fig. 1 zeigt ein Datenverarbeitungssystem 10 in einem sehr allgemeinen Blockdiagramm mit den Komponenten 12, 14, 16, 18, 20 und 22. Dabei ist ein Computer 12 als größte Komponente dargestellt. Der Computer ist mit einer Eingabe-Einrichtung 14 verbunden, hier mittels eines Pfeils in Richtung des Computers veranschaulicht. Außerdem ist der Computer 12 mit einer Ausgabe-Einrichtung 16 verbunden, hier mittels eines Pfeils in Richtung in Richtung der Ausgabe-Einrichtung 16 gezeigt. Der Computer 12 ist ebenfalls verbunden mit einem Netzwerk 18 dargestellt mit einem Doppelpfeil. Zudem sind ein Computerprogramm 20 und ein Speichermedium 22 als innere Komponenten des Computers 12 dargestellt.

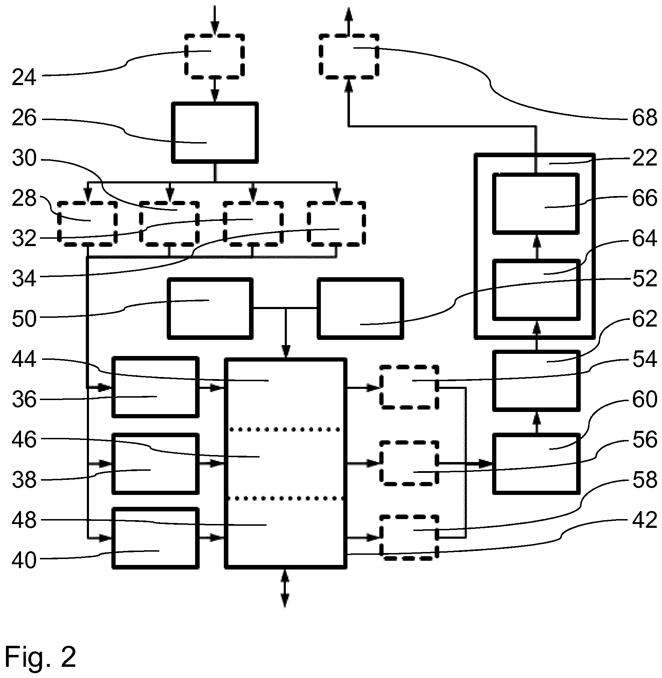

Die Eingabe-Einrichtung 14 und die Ausgabe-Einrichtung 16 sind für eine Kommunikation zwischen dem Computer 12 und einem Nutzer vorgesehen. Mittels der Eingabe-Einrichtung 14 werden Daten von dem Nutzer an den Computer 12 übertragen, wobei die Eingabe-Einrichtung 14 hier eine Tastatur ist. Mittels der Ausgabe-Einrichtung 16 werden Daten von dem Computer 12 an den Nutzer übergeben, wobei die Ausgabe-Einrichtung 16 hier ein Bildschirm ist. Bei dem Netzwerk 18 handelt es sich hier um das Internet, welches für den Computer 12 als Informationsquelle verwendet wird. Das Computerprogramm 20 nutzt das Speichermedium 22 zum Speichern von Daten. In der nachfolgenden Figurenbeschreibung zu Fig. 2 sind die in dem Computer 12 vorgesehenen Komponenten, sowie von dem Computerprogramm 20 verwendete Komponenten und Datenobjekte detailliert und in ihren Beziehungen zueinander dargestellt. Mit den Komponenten sind sowohl Hardware-Komponenten, wie zum Beispiel das Speichermedium 22, als auch Software-Komponenten, wie zum Beispiel das Computerprogramm 20 oder Programm-Komponenten des Computerprogramms 20, gemeint.

In Fig. 2 sind die auf dem Computer 12 installierten und von dem Computerprogramm 20 verwendeten Komponenten und Datenobjekte gemäß Block II in Fig. 1 in einer detaillierten Form abgebildet. Dabei stellt ein Rechteck mit durchgehendem Rahmen eine Komponente und ein Rechteck mit gestricheltem Rahmen ein Datenobjekt dar. Als Einstieg in die Fig. 2 dient hier der von außen auf die Komponente 24 zeigende Pfeil. Dabei zeigt der Pfeil auf einen Anfrage-Datensatz 24. Der Anfrage-Datensatz 24 ist mit einer Varianten-Erstellungseinrichtung 26 verbunden, gekennzeichnet mit einem Pfeil in Richtung der Varianten-Erstellungseinrichtung 26. Von der Varianten-Erstellungseinrichtung 26 gehen vier Pfeile ab, welche bei den Datenobjekten 28, 30, 32 und 34 enden. Dabei handelt es sich um Varianten des Anfrage-Datensatzes 24. Von diesen Varianten 28, 30, 32 und 34 führen jeweils drei Pfeile zu einem ersten Suchalgorithmus 36, einem zweiten Suchalgorithmus 38 und einem dritten Suchalgorithmus 40.

Von den drei Suchalgorithmen führt jeweils ein Pfeil zu einem Suchraum 42, der in drei Segmente 44, 46, 48 aufgeteilt ist. Dabei zeigt der von dem ersten Suchalgorithmus 36 abgehende Pfeil auf das erste Segment 44, der von dem zweiten Suchalgorithmus 38 abgehende Pfeil auf das zweite Segment 46 und der von dem dritten Suchalgorithmus 40 abgehende Pfeil auf das dritte Segment 48. Auf den Suchraum 42 zeigen außerdem zwei Pfeile von einer Segmentier-Einrichtung 50 und einer Indexier-Einrichtung 52. Von den Segmenten 44, 46, 48 führt jeweils ein Pfeil zu einem Ergebnis-Datensatz 54, 56, 58, wobei der von dem ersten Segment 44 abgehende Pfeil auf den ersten Ergebnis-Datensatz 54, der von dem zweiten Segment 46 abgehende Pfeil auf den zweiten Ergebnis-Datensatz 56 und der von dem dritten Segment 48 abgehende Pfeil auf den dritten Ergebnis-Datensatz 58 zeigt. Von den drei Ergebnis-Datensätzen führt jeweils ein Pfeil zu einer Konfidenzbestimmungseinrichtung 60. Von dort führt ein Pfeil zu einer Ergebnis-Sortiereinrichtung 62. Von der Ergebnis-Sortiereinrichtung 62 führt ein Pfeil in das Speichermedium 22 hinein zu einer Ergebnis-Speichereinrichtung 64, von dort weiter zu einer Antwort-Speichereinrichtung 66 und von dieser aus dem Speichermedium 22 heraus zu einem Antwort-Datensatz 68. Der von dem Antwort-Datensatz 68 wegführende Pfeil stellt den Ausstieg aus der Fig. 2 und somit aus Block II in Fig. 1 dar.

Nachdem die einzelnen auf dem Computer 12 installierten und von dem Computerprogramm 20 verwendeten Komponenten und Datenobjekte des Datenverarbeitungssystems 10 mit ihren Verbindungen aufgeführt wurden, erfolgt nun eine funktionale Erläuterung. Aus dem Anfrage-Datensatz 24 werden in der Varianten-Erstellungseinrichtung 26 vier Varianten 28, 30, 32 und 34 erstellt. Es entstehen eine erste Variante 28 mit dem originalen Anfrage-Datensatz 24, eine zweite Variante 30 mit einer auf Eingabefehler geprüften Version des Anfrage-Datensatzes 24, eine dritte Variante 32 mit einer um mindestens eine Information erweiterten Version des Anfrage-Datensatzes 24 und eine vierte Variante 34 mit einer auf Eingabefehler geprüften und um mindestens eine Information erweiterte Version des Anfrage-Datensatzes 24. Diese Varianten 28, 30, 32, 34 werden nun an die Suchalgorithmen 36, 38, 40 übergeben. Mittels der Suchalgorithmen 36, 38, 40 wird der Suchraum 42 durchsucht, welcher zuvor mittels der Segmentier-Einrichtung 50 in die Segmente 44, 46 und 48 aufgeteilt, die wiederum mittels der Indexier-Einrichtung 52 indexiert wurden.

Zum Durchsuchen der Segmente 44, 46, 48 werden von einem Hauptprozess drei parallele bzw. zeitgleich ablaufende Prozesse, im Folgenden auch Segment-Prozesse genannt, gestartet. In einem ersten Prozess wird der erste Suchalgorithmus 36 auf das erste Segment 44 des Suchraum 42 angewendet, wobei der Ergebnis-Datensatz 54 erzeugt wird. Ebenso werden bei den anderen beiden Prozessen die Suchalgorithmen 38, 40 auf die Segmente 46, 48 des Suchraums 42 angewendet, wobei die Ergebnis-Datensätze 56, 58 erzeugt werden. Für alle Segmente 44, 46, 48 wird der gleiche Suchalgorithmus 36, 38, 40 ausgeführt. Dabei handelt es sich um hier einen Algorithmus zur Neuronalnetzwerk-Suche mittels eines Shallow-Neuronalnetzwerks. Jeder Segment-Prozess übergibt schließlich mindestens einen, hier vereinfachend und beispielhaft genau einen Ergebnis-Datensatz 54, 56, 58 an den Hauptprozess, bevor der Segment-Prozess jeweils beendet wird. Für jeden Ergebnis-Datensatz 54, 56, 58 wird dann mittels der Konfidenz-Bestimmungseinrichtung 60 ein Konfidenz-Wert erzeugt, der ein Maß für die Wahrscheinlichkeit darstellt, dass der erzeugte Ergebnis-Datensatz eine passgenaue Information zu dem Anfrage-Datensatz 24 enthält. Anhand der Konfidenz-Werte werden der Ergebnis-Datensätze 54, 56, 58 mithilfe der Ergebnis-Sortiereinrichtung sortiert, beginnend mit dem höchsten Konfidenz-Wert.

Eine bestimmte Anzahl der Ergebnis-Datensätze 54, 56, 58 wird in der Ergebnis-Speichereinrichtung 64 gespeichert, hier beispielhaft die zwei Ergebnis-Datensätze 54 und 58, welche hier ebenfalls beispielhaft die höchsten Konfidenz-Werte haben. Von diesen Ergebnis-Datensätzen 54, 58 wird der Ergebnis-Datensatz mit dem höchsten Konfidenz-Wert, hier beispielhaft der Ergebnis-Datensatz 58, in der Antwort-Speichereinrichtung 66 gespeichert und als Antwort-Datensatz 68 ausgegeben. Die übrigen Ergebnis-Datensätze, hier nur der Ergebnis-Datensatz 54, werden vorgehalten, um bei Bedarf alternative und/oder ergänzende Informationen zum Anfrage-Datensatz 24 abrufen zu können.

Die Fig. 3 zeigt ein computerimplementiertes Verfahren 100 in einem sehr allgemeinen Programmablaufplan mit den Verfahrensschritten 110, 120, 130, 230 und 240. Für die in dieser und den folgenden Figurenbeschreibungen genannten Komponenten werden die Bezugszeichen aus den Figuren 1 und 2 verwendet. Wie bereits erwähnt, wurden zur besseren Unterscheidbarkeit zweistellige Bezugszeichen für Komponenten und dreistellige Bezugszeichen für Verfahrensschritte, im Folgenden auch Schritte genannt, verwendet. Der Einstieg in das Verfahren 100 erfolgt mit einem Start 110, gefolgt von einem Eingeben 120 des Anfrage-Datensatzes 24. Nun erfolgt ein Ermitteln 130 des Antwort-Datensatzes 68, bevor dann ein Ausgeben 230 des Antwort-Datensatzes 68 als letzter Verfahrensschritt vor dem Ende 240 erfolgt. Wie das Ermitteln 130 dieses Antwort-Datensatzes 68 erfolgt, wird in den nachfolgenden Figurenbeschreibungen detailliert dargestellt.

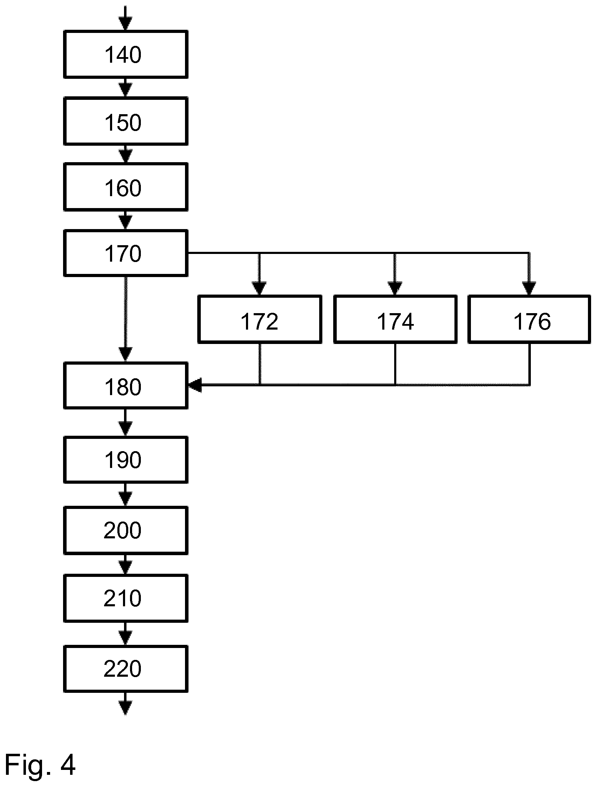

In Fig. 4 ist der Verfahrensschritt zum Ermitteln 130 des Antwort-Datensatzes 68 gemäß Detail IV in Fig. 3 in einer detaillierteren Form veranschaulicht und beinhaltet die Verfahrensschritte 140 bis 220. In Schritt 140 wird der Suchraum 42 in mehrere Segmente 44, 46, 48 aufgeteilt, welche in Schritt 150 indexiert werden. Es folgt ein Erstellen 160 mindestens einer Variante des Anfrage-Datensatzes 24, hier die beiden auf Eingabefehler geprüften Varianten 30 und 34 des Anfrage-Datensatzes 24, wobei die Variante 34 gleichzeitig um mindestens eine Information erweitert ist. In Schritt 170 werden aus dem Hauptprozess heraus mehrere Segment-Prozesse bzw. die Suchalgorithmen 36, 38, 40 zeitgleich gestartet, wobei die Varianten 30, 34 des Anfrage-Datensatzes 24 jeweils übergeben werden.

Die parallel ablaufenden Segment-Prozesse sind hier durch die Schritte 172, 174 und 176 veranschaulicht, wobei jeweils mindestens ein Ergebnis-Datensatz 54, 56, 58 erzeugt wird. In Schritt 180 werden die Ergebnis-Datensätze 54, 56, 58 an den Hauptprozess übergeben und die Segment-Prozesse anschließend beendet. Es folgt jeweils ein Bestimmen 190 des Konfidenz-Wertes für die Ergebnis-Datensätze 54, 56, 58, die dann in Schritt 200 nach ihren Konfidenz-Werten sortiert werden, mit dem höchsten Konfidenz-Wert beginnend. Eine bestimmte Anzahl der Ergebnis-Datensätze, hier alle drei, werden in Schritt 210 in der Ergebnis-Speichereinrichtung 64 gespeichert. In Schritt 220 wird der Ergebnis-Datensatz mit dem höchsten Konfidenz-Wert, hier der Ergebnis-Datensatz 56, als Antwort-Datensatz 68 in der Antwort-Speichereinrichtung 66 gespeichert. Schließlich wird der ermittelte Antwort-Datensatz zum Ausgeben weitergeleitet.

### Bezugszeichenliste

- 10: Datenverarbeitungssystem
- 12: Computer
- 14: Eingabe-Einrichtung
- 16: Ausgabe-Einrichtung
- 18: Netzwerk
- 20: Computerprogramm
- 22: Speichermedium
- 24: Anfrage-Datensatz
- 26: Varianten-Erstellungseinrichtung
- 28: Variante des Anfrage-Datensatzes
- 30: Variante des Anfrage-Datensatzes
- 32: Variante des Anfrage-Datensatzes
- 34: Variante des Anfrage-Datensatzes
- 36: Suchalgorithmus
- 38: Suchalgorithmus
- 40: Suchalgorithmus
- 42: Suchraum
- 44: Segment
- 46: Segment
- 48: Segment
- 50: Segmentier-Einrichtung
- 52: Indexier-Einrichtung
- 54: Ergebnis-Datensatz
- 56: Ergebnis-Datensatz
- 58: Ergebnis-Datensatz
- 60: Konfidenz-Bestimmungseinrichtung
- 62: Ergebnis-Sortiereinrichtung
- 64: Ergebnis-Speichereinrichtung
- 66: Antwort-Speichereinrichtung
- 68: Antwort-Datensatz
- 100: Computerimplementiertes Verfahren
- 110: Start
- 120: Eingeben eines Anfrage-Datensatzes
- 130: Ermitteln eines Antwort-Datensatzes zu dem Anfrage-Datensatz
- 140: Aufteilen eines Suchraums in mehrere Segmente
- 150: Indexieren der Segmente
- 160: Erstellen mindestens einer Variante des Anfrage-Datensatzes
- 170: Ausführen mehrerer zeitgleicher Suchalgorithmen bzw. Starten mehrerer paralleler Segment-Prozesse und Übergeben der mindestens einen Variante des Anfrage-Datensatzes
- 172: Erzeugen mindestens eines Ergebnis-Datensatzes
- 174: Erzeugen mindestens eines Ergebnis-Datensatzes
- 176: Erzeugen mindestens eines Ergebnis-Datensatzes
- 180: Übergeben der Ergebnis-Datensätze an den Hauptprozess und Beenden der Segment-Prozesse
- 190: Bestimmen eines Konfidenz-Werts für jeden Ergebnis-Datensatz
- 200: Sortieren der Ergebnis-Datensätze nach ihren Konfidenz-Werten
- 210: Bereitstellen / Speichern einer bestimmten Anzahl Ergebnis-Datensätze
- 220: Speichern des Ergebnis-Datensatzes mit dem höchsten Konfidenz-Wert als Antwort-Datensatz
- 230: Ausgeben des Antwort-Datensatzes
- 240: Ende

## Patentansprüche

1. Computerimplementiertes Verfahren (100) zum Abfragen eines Suchraums (42) mit den Verfahrensschritten:
- Eingeben (120) eines Anfrage-Datensatzes (24),
- Ermitteln (130) eines Antwort-Datensatzes (68) zu dem Anfrage-Datensatz (24) und
- Ausgeben (230) des Antwort-Datensatzes (68),
**dadurch gekennzeichnet, dass** bei dem Ermitteln (130) des Antwort-Datensatzes (68) ein zeitgleiches Ausführen (170) von mindestens zwei Suchalgorithmen (36, 38, 40) erfolgt.

2. Computerimplementiertes Verfahren (100) nach Anspruch 1,
**dadurch gekennzeichnet, dass** bei dem Ermitteln (130) des Antwort-Datensatzes (68) ein Erstellen (160) mindestens einer Variante (28, 30, 32, 34) des Anfrage-Datensatzes (24) und ein Übergeben (170) der mindestens einen Variante (28, 30, 32, 34) an die mindestens zwei Suchalgorithmen (36, 38, 40) erfolgt.

3. Computerimplementiertes Verfahren (100) nach Anspruch 1 oder 2,
**dadurch gekennzeichnet, dass** bei dem Ermitteln (130) des Antwort-Datensatzes (68) ein Aufteilen (140) des Suchraums (42) in mehrere Segmente (44, 46, 48) mit jeweils einem Suchalgorithmus (36, 38, 40) pro Segment (44, 46, 48) erfolgt.

4. Computerimplementiertes Verfahren (100) nach Anspruch 3,
**dadurch gekennzeichnet, dass** bei dem Aufteilen (140) des Suchraums (42) ein Indexieren (150) der Segmente erfolgt.

5. Computerimplementiertes Verfahren nach (100) Anspruch 3 oder 4,
**dadurch gekennzeichnet, dass** bei dem Ausführen (170) der mindestens zwei Suchalgorithmen (36, 38, 40) aus einem Hauptprozess heraus für jedes Segment (44, 46, 48) ein Starten (170) eines Segment-Prozesses, ein Erzeugen (172, 174, 176) und Übergeben (180) mindestens eines Ergebnis-Datensatzes (54, 56, 58) pro Segment (44, 46, 48) an den Hauptprozess und ein Beenden des jeweiligen Segment-Prozesses erfolgt.

6. Computerimplementiertes Verfahren (100) nach Anspruch 5,
**dadurch gekennzeichnet, dass** bei dem Ausführen (170) der mindestens zwei Suchalgorithmen (36, 38, 40) ein Bestimmen (190) eines Konfidenz-Werts für jeden Ergebnis-Datensatz (54, 56, 58) und ein Sortieren (200) der Ergebnis-Datensätze (54, 56, 58) nach ihren Konfidenz-Werten erfolgt.

7. Computerimplementiertes Verfahren (100) nach Anspruch 6,
**dadurch gekennzeichnet, dass** bei dem Ausführen (170) der mindestens zwei Suchalgorithmen (36, 38, 40) ein Bereitstellen (210) einer bestimmten Anzahl von Ergebnis-Datensätzen (54, 56, 58) mit den höchsten Konfidenz-Werten, vorzugsweise die Ergebnis-Datensätze (54, 56, 58) mit den zehn höchsten Konfidenz-Werten.

8. Computerimplementiertes Verfahren (100) nach einem der vorhergehenden Ansprüche,
**dadurch gekennzeichnet, dass** bei dem Ausführen (170) der mindestens zwei Suchalgorithmen (36, 38, 40) ein Neuronalnetzwerk-Suchen erfolgt, vorzugsweise mittels eines Shallow-Neuronalnetzwerks.

9. Computerlesbares Speichermedium (22) mit einem Computerprogramm (20) mit Befehlen, die bei dem Ausführen des Computerprogramms (20) einen Computer (12) dazu veranlassen, die Schritte eines computerimplementierten Verfahrens (100) nach einem der Ansprüche 1 bis 8 auszuführen.

10. Datenverarbeitungssystem (10) zum Ausführen eines computerimplementierten Verfahrens (100) nach einem der Ansprüche 1 bis 8, bei dem das Datenverarbeitungssystem (10) einen Computer (12), eine Eingabe-Einrichtung (14), eine Ausgabe-Einrichtung (16) und ein Netzwerk (18) aufweist, wobei der Computer (12) ein Computerprogramm (20) und ein Speichermedium (22) umfasst.
